# EUROPEAN PATENT APPLICATION

(11) **EP 4 280 747 A1**
(43) Date of publication of application: **22.11.2023**
(21) Application number: 21919353.9
(22) Date of filing: 14.01.2021
(51) Int. Cl.: H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/001116
(87) International publication number: WO 2022/153460

(57) **Abstract**

A terminal according to one aspect of the present disclosure includes: a control section that determines a downlink control channel (Physical Downlink Control Channel (PDCCH)) to monitor from among PDCCHs in a plurality of control resource sets (CORESETs) overlapping in time, based on association between the CORESETs; and a receiving section that monitors the determined PDCCH. According to one aspect of the present disclosure, it is possible to appropriately address collision of a plurality of downlink control channels.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In previous Rel-15/16 NR specifications, a restriction (which may be referred to as a priority rule) is defined to ensure that, in a case where a plurality of channels/signals collide, the plurality of channels/signals correspond to the same quasi-co-location (QCL) type D or to avoid such a case.

For NR, it is studied that one or a plurality of transmission/reception points (TRPs) (multi-TRP (MTRP)) perform DL transmission to a user terminal (User Equipment (UE)). It is also studied that the UE performs UL transmission to the one or plurality of TRPs.

For Rel-17 NR, it is studied to support simultaneous reception of channels/signals of a plurality of types of QCL type D in a UE. However, study has not been advanced yet for control of collision of downlink control channels in a case where a UE can simultaneously receive a plurality of channels/signals of QCL type D. Unless this respect is studied, transmission and/or reception of a UE is inappropriately restricted, which may decrease throughput or degrade communication quality.

Thus, an object of the present disclosure is to provide a terminal, a radio communication method, and a base station that can appropriately address collision of a plurality of downlink control channels.

### Solution to Problem

A terminal according to one aspect of the present disclosure includes: a control section that determines a downlink control channel (Physical Downlink Control Channel (PDCCH)) to monitor from among PDCCHs in a plurality of control resource sets (CORESETs) overlapping in time, based on association between the CORESETs; and a receiving section that monitors the determined PDCCH.

### Advantageous Effects of Invention

According to one aspect of the present disclosure, it is possible to appropriately address collision of a plurality of channels/signals.

### Brief Description of Drawings

[FIG. 1] FIG. 1 is a diagram to show an example of a prioritized CORESET and other CORESETs monitored simultaneously in Embodiment 1.1.1.
[FIG. 2] FIG. 2 is a diagram to show an example of prioritized CORESETs in Embodiment 1.1.2.1.
[FIG. 3] FIG. 3 is a diagram to show an example of prioritized CORESETs in Embodiment 1.1.2.1.
[FIG. 4] FIG. 4 is a diagram to show an example of prioritized CORESETs in Embodiment 1.1.2.1.
[FIG. 5] FIG. 5 is a diagram to show an example of prioritized CORESETs in Embodiment 1.1.2.2.
[FIG. 6] FIG. 6 is a diagram to show an example of prioritized CORESETs and another CORESET monitored simultaneously in Embodiment 1.1.2.
[FIG. 7] FIG. 7 is a diagram to show an example of prioritized CORESETs and other CORESETs monitored simultaneously in Embodiment 1.1.2.
[FIG. 8] FIG. 8 is a diagram to show an example of a prioritized CORESET and other CORESETs monitored simultaneously in Embodiment 1.2.
[FIG. 9] FIG. 9 is a diagram to show an example of a prioritized CORESET and other CORESETs monitored simultaneously in Embodiment 2.1.1.
[FIG. 10] FIG. 10 is a diagram to show an example of prioritized CORESETs in Embodiment 2.1.2.1.
[FIG. 11] FIG. 11 is a diagram to show an example of prioritized CORESETs in Embodiment 2.1.2.2.
[FIG. 12] FIG. 12 is a diagram to show an example of a prioritized CORESET and other CORESETs monitored simultaneously in Embodiment 2.1.2.
[FIG. 13] FIG. 13 is a diagram to show an example of a prioritized CORESET and other CORESETs monitored simultaneously in Embodiment 2.2.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.

### Description of Embodiments

### (TCI, Spatial Relation, QCL)

For NR, it is studied to control reception processing (for example, at least one of reception, demapping, demodulation, and decoding) and transmission processing (for example, at least one of transmission, mapping, precoding, modulation, and coding) of at least one of a signal and a channel (which may be referred to as a signal/channel) in a UE, based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameters (which may be referred to as QCL parameters) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel / reference signal (RS) or simply as a target, and another signal described above may be referred to as a reference reference signal (reference RS) and a source RS or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a demodulation reference signal (DMRS), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

### (Collision of Plurality of Channels/Signals)

In previous Rel-15/16 NR specifications, a UE can receive, detect, or monitor only channels/signals of the same QCL type D in the same time but cannot receive, detect, or monitor a plurality of channels/signals of different types of QCL type D in the same time. In view of this, such restrictions (which may also be referred to as priority rules, QCL application rules, and the like) as those to be described below are defined, in Rel-15/16 NR specifications, to ensure that, in a case where a plurality of channels/signals collide (in other words, are transmitted/received in overlapping time), the plurality of channels/signals correspond to the same QCL type D or to avoid such a case.

Note that, in the present disclosure, a plurality of channels/signals colliding may mean a plurality of channels/signals of different types of QCL type D being scheduled (or configured) to be received (or transmitted) in the same time resource (period).

In the present disclosure, (a reference RS of) QCL type D of a given channel/signal and (a reference RS of) QCL type D of another channel/signal being different from each other may mean a beam used for communication of the given channel/signal and a beam used for communication of such another channel/signal being different from each other. In the present disclosure, (a reference RS of) QCL type D of a given channel/signal and (a reference RS of) QCL type D of another channel/signal being different from each other may be referred to as the types of QCL type D of the given channel/signal and such another channel/signal being different from each other, QCL type D characteristics of the channels/signals being different from each other, being different in "QCL type D," and the like.

### <PDCCH vs. PDCCH>

When a UE is configured with single-cell operation or operation of carrier aggregation of the same frequency band and monitors PDCCH candidates in overlapping monitoring occasions in a plurality of CORESETs having the same or different QCL type D characteristics in an active DL BWP(s) of one or more cells, the UE monitors PDCCHs only in a given CORESET and a CORESET having the same QCL type D characteristics as those of the given CORESET among the plurality of CORESETs.

This "given CORESET" corresponds, if any, to a common search space (CSS) set of the lowest index in a cell of the lowest index including CSS sets and otherwise corresponds to a UE-specific search space (USS) set of the lowest index of a cell of the lowest index. The lowest USS set index is determined over all the USS sets including at least one PDCCH candidate in the overlapping PDCCH monitoring occasions.

To put it simply, when the UE monitors PDCCH candidates in overlapping monitoring occasions, the UE determines a monitoring target CORESET in accordance with a priority rule that a CSS set is monitored more preferentially than a USS set, and an SS set of a smaller index (in other words, an SS set of a smaller cell index, and an SS set of a smaller SS set index if cell indices are the same) is monitored preferentially among SS sets of the same type (CSS or USS).

Note that the SS set index may correspond to a value configured by an RRC parameter SearchSpaceId for identifying a search space. Note that, in the present disclosure, a CSS set index may mean an SS set index of an SS set with a search space type (RRC parameter "searchSpaceType") indicating CSS. In the present disclosure, a USS set index may mean an SS set index of an SS set with a search space type (RRC parameter "searchSpaceType") indicating USS.

### (Multi-TRP)

For NR, it is studied that one or a plurality of transmission/reception points (TRPs) (multi-TRP (MTRP)) perform DL transmission to a UE. It is also studied that the UE performs UL transmission to the one or plurality of TRPs.

In Rel. 17 (or later versions), it is also assumed that repetition transmission (PDCCH repetition) is applied to PDCCHs (or pieces of DCI) transmitted from one or more TRPs. For example, it is conceivable that scheduling or transmission/reception indication of one or more signals/channels is performed by using a plurality of PDCCHs (or pieces of DCI) transmitted from the one or more TRPs.

The PDCCHs / pieces of DCI to which repetition transmission is applied may be referred to as multi-PDCCH/multi-DCI. PDCCH repetition transmission may be interpreted as PDCCH repetition, a plurality of PDCCH transmissions, multi-PDCCH transmission or multiple PDCCH transmissions, MTR PDCCH, and the like, and vice versa.

Multi-PDCCH/multi-DCI may be transmitted from different TRPs. The multi-PDCCH/DCI may be multiplexed by using time division multiplexing (TDM) / frequency division multiplexing (FDM) / space division multiplexing (SDM).

For example, when PDCCH repetition (TDM PDCCH repetition) is performed by using TDM, PDCCHs may be transmitted from the plurality of TRPs by using different time resources.

When FDM PDCCH repetition is performed, PDCCHs may be transmitted from the plurality of TRPs by using different frequency time resources. In the FDM PDCCH repetition, at least one of two sets of resource element groups (REGs), control channel elements (CCEs) of transmitted PDCCHs, two transmitted PDCCH repetitions not overlapping in frequency, and transmitted multi-chance PDCCHs not overlapping in frequency may be related to different TCI states.

When SDM PDCCH repetition is performed, PDCCHs may be transmitted from the plurality of TRPs by using the same time/frequency resource. In SDM PDCCH repetition, PDCCH DMRSs in all the REGs/CCEs of the PDCCHs may be related to two TCI states. Note that, in the present disclosure, SDM and a single frequency network (SFN) may be interchangeably interpreted.

It is assumable that a UE to which FDM/SDM PDCCH repetition is applied can receive a plurality of beams (channels/signals of a plurality of types of QCL type D) simultaneously. However, study has not been advanced yet for whether control of collision of PDCCHs in a case where a UE can simultaneously receive a plurality of beams (channels/signals of a plurality of types of QCL type D) follows the above-described restriction (priority rule). Unless this respect is studied, transmission and/or reception of a UE is inappropriately restricted, which may decrease throughput or degrade communication quality.

Thus, the inventors of the present invention came up with the idea of control that can appropriately deal with collision of a plurality of PDCCHs.

Embodiments according to the present disclosure will be described in detail with reference to the drawings as follows. The radio communication methods according to respective embodiments may each be employed individually, or may be employed in combination.

Note that, in the present disclosure, "A/B" may mean "at least one of A and B."

In the present disclosure, activate, deactivate, indicate, select, configure, update, determine, and the like may be interchangeably interpreted.

In the present disclosure, RRC, an RRC parameter, an RRC message, a higher layer parameter, an information element (IE), and a configuration may be interchangeably interpreted. In the present disclosure, a MAC CE, an update command, and an activation/deactivation command may be interchangeably interpreted. In the present disclosure, "support," "control," "controllable," "operate," and "operable" may be interchangeably interpreted.

In the present disclosure, a sequence, a list, a set, a group, and the like may be interchangeably interpreted.

In the present disclosure, a panel, a beam, a panel group, a beam group, an Uplink (UL) transmission entity, a TRP, spatial relation information (SRI), a spatial relation, a control resource set (CORESET), a Physical Downlink Shared Channel (PDSCH), a codeword, a base station, a given antenna port (for example, a demodulation reference signal (DMRS) port), a given antenna port group (for example, a DMRS port group), a given group (for example, a code division multiplexing (CDM) group, a given reference signal group, or a CORESET group), a given resource (for example, a given reference signal resource), a given resource set (for example, a given reference signal resource set), a CORESET pool, a PUCCH group (PUCCH resource group), a spatial relation group, a downlink TCI state (DL TCI state), an uplink TCI state (UL TCI state), a unified TCI state, and the like may be interchangeably interpreted.

The Panel may be related to at least one of a group index of an SSB/CSI-RS group, a group index of group-based beam report, and a group index of an SSB/CSI-RS group for group-based beam report.

A panel Identifier (ID) and a panel may be interchangeably interpreted. In other words, a TRP ID and a TRP, a CORESET group ID and a CORESET group, and the like may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the present disclosure, it may be assumed that a single PDCCH is supported when multi-TRP uses ideal backhaul. It may be assumed that multi-PDCCH is supported when multi-TRP uses non-ideal backhaul.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. Terms are not limited to these.

In the present disclosure, multi-TRP, a multi-TRP system, multi-TRP transmission, and multi-PDSCH may be interchangeably interpreted.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

QCL in the present disclosure may be interchangeably interpreted as QCL type D.

Note that, although a description will be given by assuming that the following embodiments are applied when a UE supports simultaneous reception of channels/signals of two or more different types of QCL type D, but the embodiments may be applied to other cases.

In the present disclosure, "TCI state A is of the same QCL type D as that of TCI state B," "TCI state A and TCI state B are the same," "TCI state A is QCL type D with TCI state B," and the like may be interchangeably interpreted.

### (Radio Communication Method)

### <First Embodiment>

A first embodiment relates to an SFN PDCCH repetition scheme.

In the first embodiment, two or more TCI states may be activated per CORESET. A UE may be notified of activation of the TCI states for the CORESET by using a MAC CE.

In the first embodiment, in a case where a plurality of PDCCHs of different types of QCL type D collide, the UE determines a PDCCH (CORESET) to monitor, based on at least one priority rule illustrated in Embodiments 1.1 to 1.3. Each of the embodiments will be described below.

In for following, in the present disclosure, a monitoring target CORESET determined based on a priority rule will be simply referred to as a "prioritized CORESET," a CORESET with the highest priority, and the like.

### {Embodiment 1.1}

The priority rule of Embodiment 1.1 is the same as that of Rel-16 NR. Specifically, the UE determines a prioritized CORESET in accordance with a priority rule that a CSS set is monitored more preferentially than a USS set, and an SS set of a smaller index (in other words, an SS set of a smaller cell index, and an SS set of a smaller SS set index if cell indices are the same) is monitored preferentially among SS sets of the same type (CSS or USS).

Embodiment 1.1 is further broadly divided into the following two embodiments:
- Embodiment 1.1.1: a prioritized CORESET includes two active TCI states (two types of QCL type D), and
- Embodiment 1.1.2: a prioritized CORESET includes one active TCI state (one type of QCL type D).

### {{Embodiment 1.1.1}}

Regarding a CORESET being other than the prioritized CORESET and having one active TCI state, the UE may monitor this CORESET when the one active TCI state is the same QCL type D as that of one of the two active TCI states of the prioritized CORESET.

Regarding a CORESET being other than the prioritized CORESET and having two active TCI states, the UE may monitor this CORESET when the following condition (1.1.1a) or (1.1.1b) is satisfied:
(1.1.1a) the two active TCI states have the same QCL type D as those of the two active TCI states of the prioritized CORESET, and
(1.1.1b) one of the two active TCI states has the same QCL type D as that of one of the two active TCI states of the prioritized CORESET.

Note that, when (1.1.1b) above is satisfied, the UE applies only the TCI state of the same QCL type D as the one of the two active TCI states of the prioritized CORESET, to monitor the CORESET.

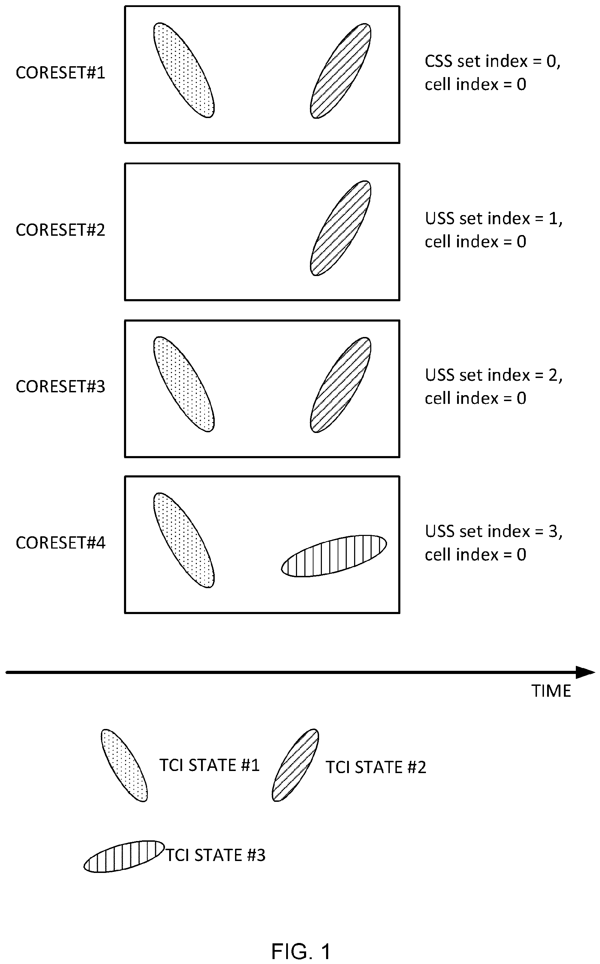

FIG. 1 is a diagram to show an example of a prioritized CORESET and other CORESETs monitored simultaneously in Embodiment 1.1.1. In this example, four CORESETs (CORESETs #1 to #4) overlap in time.

CORESET #1 corresponds to CSS set index = 0 and cell index = 0 and has two active TCI states (TCI states #1 and #2).

CORESET #2 corresponds to USS set index = 1 and cell index = 0 and has one active TCI state (TCI state #2).

CORESET #3 corresponds to USS set index = 2 and cell index = 0 and has two active TCI states (TCI states #1 and #2).

CORESET #4 corresponds to USS set index = 3 and cell index = 0 and has two active TCI states (TCI states #1 and #3).

In the case of FIG. 1, the UE first selects CORESET #1 corresponding to a CSS set, as a prioritized CORESET. Since CORESET #1 has two active TCI states, this corresponds to operation of Embodiment 1.1.1.

Since the one TCI state of CORESET #2 has the same QCL type D as that of TCI state #2 of the prioritized CORESET, the UE monitors CORESET #2.

Since the two TCI states of CORESET #3 have the same types of QCL type D as those of TCI states #1 and #2 of the prioritized CORESET, the UE monitors CORESET #3.

While one of the two TCI states of CORESET #4 has the same QCL type D as that of TCI state #1 of the prioritized CORESET, the other has a different type of QCL type D (TCI state #3) from that of TCI state #2 of the prioritized CORESET. Hence, the UE following (1.1.1a) above does not monitor CORESET #4. The UE following (1.1.1b) above applies only TCI state #1 to monitor CORESET #4.

### {{Embodiment 1.1.2}}

For Embodiment 1.1.2, a prioritized CORESET having one active TCI state determined first in accordance with the same priority rule as that in Rel-16 NR is also referred to as a first prioritized CORESET, and a prioritized CORESET determined next other than the first prioritized CORESET is also referred to as a second prioritized CORESET. The second prioritized CORESET may be referred to as a CORESET X.

The one active TCI state of the first prioritized CORESET may be referred to as a first priority TCI state (1st priority TCI state). One of the active TCI states of the second prioritized CORESET may be referred to as a second priority TCI state (2nd priority TCI state).

Embodiment 1.1.2 is broadly divided into Embodiments 1.1.2.1 and 1.1.2.2 depending on a method of determining the second prioritized CORESET.

### {{Embodiment 1.1.2.1}}

The second prioritized CORESET may be determined in accordance with a similar priority rule to that in Rel. 16 from among the remaining colliding CORESETs excluding the first prioritized CORESET. In other words, the second prioritized CORESET may correspond, if any, to a CSS set of the lowest index in a cell of the lowest index including CSS sets and otherwise correspond to a USS set of the lowest index of a cell of the lowest index, among the remaining colliding CORESETs. The lowest USS set index is determined over all the USS sets including at least one PDCCH candidate in the overlapping PDCCH monitoring occasions.

In a case where a candidate for the second prioritized CORESET derived in accordance with the priority rule includes only one active TCI state and where the active TCI state is the same as the first priority TCI state, the next candidate (CORESET corresponding to an SS set/cell of the next lowest index) may be searched for as a candidate for the second prioritized CORESET. In other words, for a CORESET including only one active TCI state, the UE may continue searching for the second prioritized CORESET until the active TCI state comes to be different from the first priority TCI state.

When a CORESET including only one active TCI state different from the first priority TCI state is found in accordance with the priority rule, the UE may determine this active TCI state as the second priority TCI state and determine this CORESET as the second prioritized CORESET.

Note that, even in a case where a candidate for the second prioritized CORESET derived in accordance with the priority rule includes only one active TCI state and where the active TCI state is the same as the first priority TCI state, the UE may determine this active TCI state as the second priority TCI state and determine this candidate as the second prioritized CORESET. In this case, the second prioritized CORESET is the same as the first prioritized CORESET and may hence be expressed that there is no second prioritized CORESET.

In a case where a candidate for the second prioritized CORESET derived in accordance with the priority rule includes two active TCI states and where one of the two active TCI states is the same as the first priority TCI state, the UE may determine the other of the two active TCI states as the second priority TCI state and determine this candidate as the second prioritized CORESET.

In a case where a candidate for the second prioritized CORESET derived in accordance with the priority rule includes two active TCI states and where both of the two active TCI states are different from the first priority TCI state, the UE may determine one of the two active TCI states as the second priority TCI state and determine this candidate as the second prioritized CORESET. This one of the TCI states may be one having the smallest or largest TCI state ID of the two active TCI states or may be that corresponding to the first or second TCI state activated by a MAC CE.

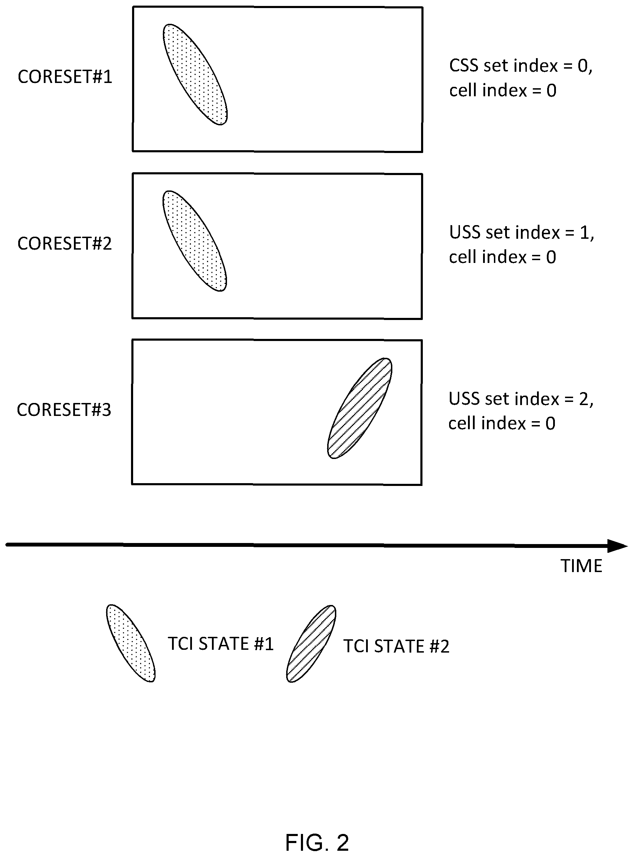

FIG. 2 is a diagram to show an example of prioritized CORESETs in Embodiment 1.1.2.1. In this example, three CORESETs (CORESETs #1 to #3) overlap in time.

CORESET #1 corresponds to CSS set index = 0 and cell index = 0 and has one active TCI state (TCI state #1).

CORESET #2 corresponds to USS set index = 1 and cell index = 0 and has one active TCI state (TCI state #1).

CORESET #3 corresponds to USS set index = 2 and cell index = 0 and has one active TCI state (TCI state #2).

In the case of FIG. 2, the UE first selects CORESET #1 corresponding to a CSS set, as a prioritized CORESET. Since CORESET #1 has one active TCI state, this corresponds to operation of Embodiment 1.1.2. This prioritized CORESET corresponds to the first prioritized CORESET, and TCI state #1 corresponds to the first priority TCI state.

Next, the UE searches for the second prioritized CORESET. Since the one TCI state of CORESET #3 is different from TCI state #1 of the prioritized CORESET, the UE determines this TCI state #2 as the second priority TCI state and determines CORESET #3 as the second prioritized CORESET, for monitoring.

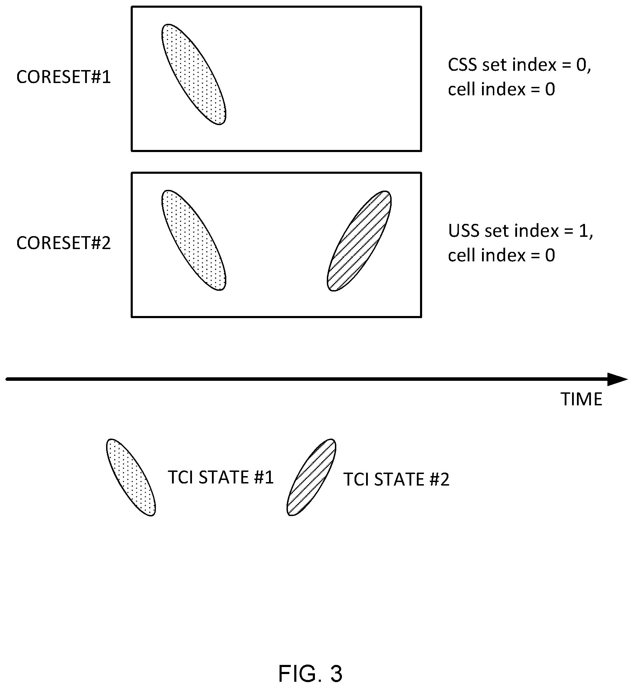

FIG. 3 is a diagram to show an example of prioritized CORESETs in Embodiment 1.1.2.1. In this example, two CORESETs (CORESETs #1 and #2) overlap in time.

CORESET #1 corresponds to CSS set index = 0 and cell index = 0 and has one active TCI state (TCI state #1).

CORESET #2 corresponds to USS set index = 1 and cell index = 0 and has two active TCI states (TCI states #1 and #2).

In the case of FIG. 3, the UE first selects CORESET #1 corresponding to a CSS set, as a prioritized CORESET. Since CORESET #1 has one active TCI state, this corresponds to operation of Embodiment 1.1.2. This prioritized CORESET corresponds to the first prioritized CORESET, and TCI state #1 corresponds to the first priority TCI state.

Next, the UE searches for the second prioritized CORESET. Since one of the two active TCI states of CORESET #2 is the same as the first priority TCI state, the UE determines the other of the two TCI states (TCI state #2) as the second priority TCI state and determines CORESET #2 as the second prioritized CORESET, for monitoring.

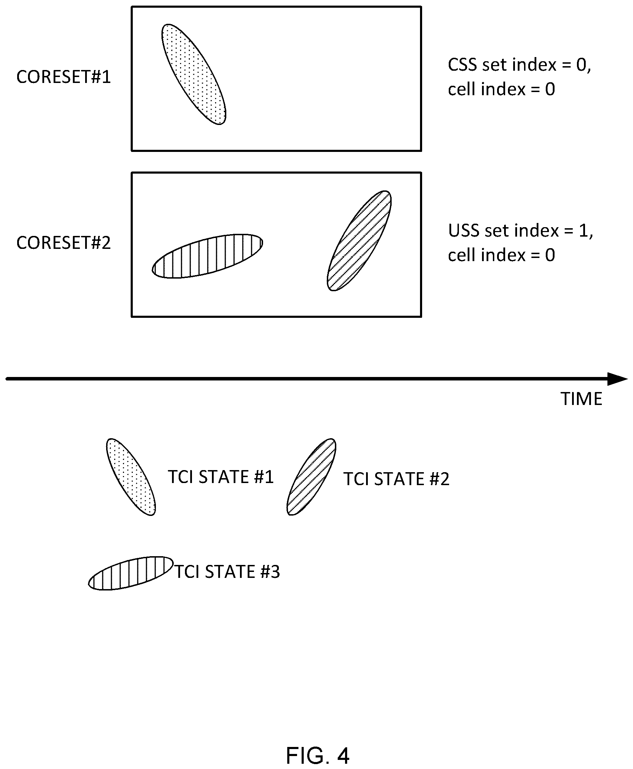

FIG. 4 is a diagram to show an example of prioritized CORESETs in Embodiment 1.1.2.1. In this example, two CORESETs (CORESETs #1 and #2) overlap in time.

CORESET #1 corresponds to CSS set index = 0 and cell index = 0 and has one active TCI state (TCI state #1).

CORESET #2 corresponds to USS set index = 1 and cell index = 0 and has two active TCI states (TCI states #3 and #2).

In the case of FIG. 4, the UE first selects CORESET #1 corresponding to a CSS set, as a prioritized CORESET. Since CORESET #1 has one active TCI state, this corresponds to operation of Embodiment 1.1.2. This prioritized CORESET corresponds to the first prioritized CORESET, and TCI state #1 corresponds to the first priority TCI state.

Next, the UE searches for the second prioritized CORESET. Since both of the two active TCI states of CORESET #2 are different from the first priority TCI state, the UE determines a TCI state having the largest TCI state ID of the two TCI states (TCI state #3) as the second priority TCI state and determines CORESET #2 as the second prioritized CORESET, to apply only TCI state #3 in CORESET #2 for monitoring of PDCCH candidates.

### {{Embodiment 1.1.2.2}}

The UE first determines a subset of CORESETs each having two active TCI states and also having one of the TCI states being the same as the first priority TCI state, from among the remaining colliding CORESETs excluding the first prioritized CORESET.

The UE then determines the second prioritized CORESET from the subset in accordance with a similar priority rule to that in Rel. 16.
In other words, the second prioritized CORESET may correspond, if any, to a CSS set of the lowest index in a cell of the lowest index including CSS sets and otherwise correspond to a USS set of the lowest index of a cell of the lowest index, among the CORESETs included in the subset.
The lowest USS set index is determined over all the USS sets including at least one PDCCH candidate in the overlapping PDCCH monitoring occasions.

The second priority TCI state corresponds to the different one from the first priority TCI state among the active TCI states of the second prioritized CORESET.

In Embodiment 1.1.2.2, a PDCCH candidate (CORESET) can be monitored by using both the first priority TCI and second priority TCI states in the second prioritized CORESET.

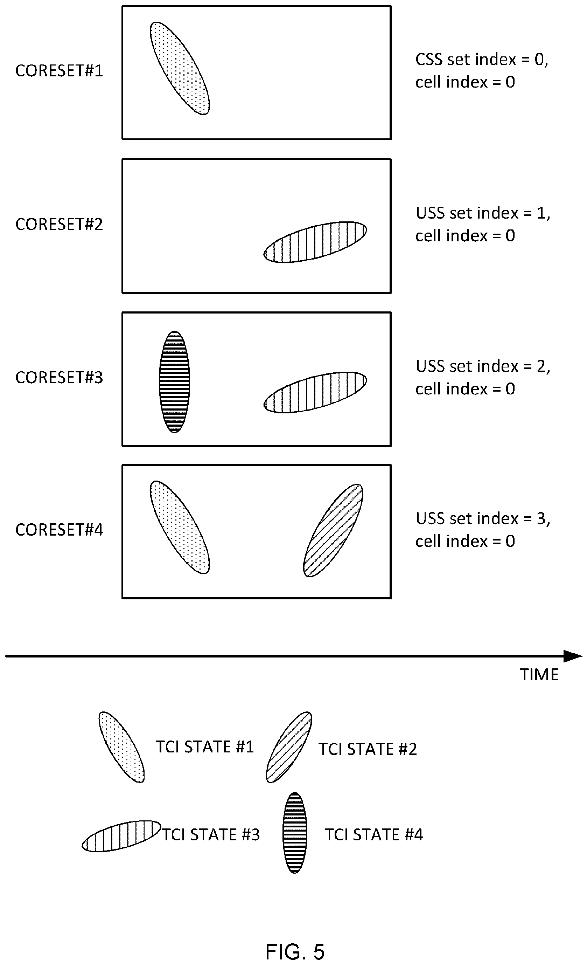

FIG. 5 is a diagram to show an example of prioritized CORESETs in Embodiment 1.1.2.2. In this example, four CORESETs (CORESETs #1 to #4) overlap in time.

CORESET #1 corresponds to CSS set index = 0 and cell index = 0 and has one active TCI state (TCI state #1).

CORESET #2 corresponds to USS set index = 1 and cell index = 0 and has one active TCI state (TCI state #3).

CORESET #3 corresponds to USS set index = 2 and cell index = 0 and has two active TCI states (TCI states #3 and #4).

CORESET #4 corresponds to USS set index = 3 and cell index = 0 and has two active TCI states (TCI states #1 and #2).

In the case of FIG. 5, the UE first selects CORESET #1 corresponding to a CSS set, as a prioritized CORESET. Since CORESET #1 has one active TCI state, this corresponds to operation of Embodiment 1.1.2. This prioritized CORESET corresponds to the first prioritized CORESET, and TCI state #1 corresponds to the first priority TCI state.

Next, the UE searches for the second prioritized CORESET. Among remaining CORESETs #2 to #4, a CORESET having two active TCI states and also having one of the TCI states being the same as the first priority TCI state is only CORESET #4. Hence, the UE determines TCI state #2 different from the first priority TCI state between the TCI states of CORESET#4, as the second priority TCI state and determines CORESET #4 as the second prioritized CORESET, to apply TCI states #1 and #2 in CORESET #4 for monitoring of PDCCH candidates.

### {{CORESET other than Prioritized CORESETs}}

Monitoring of a CORESET other than the prioritized CORESETs (first prioritized CORESET and second prioritized CORESET) in Embodiment 1.1.2 will be described.

Regarding a CORESET being other than the prioritized CORESETs and having one active TCI state, the UE may monitor this CORESET when the following condition (1.1.2a) or (1.1.2b) is satisfied:
(1.1.2a) the one active TCI state has the same QCL type D as that of the first priority TCI state, and
(1.1.2b) the one active TCI state has the same QCL type D as that of the first priority TCI state or the second priority TCI state.

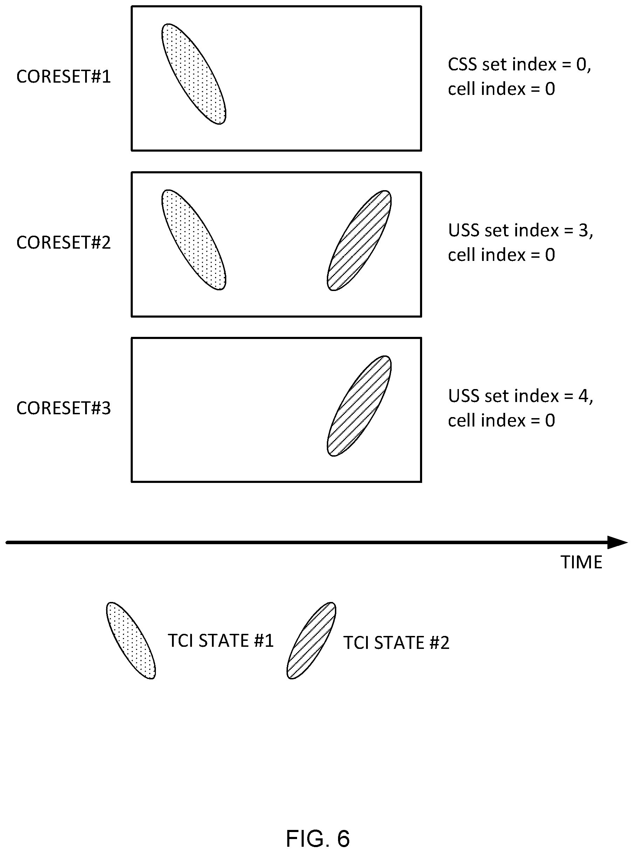

FIG. 6 is a diagram to show an example of prioritized CORESETs and another CORESET monitored simultaneously in Embodiment 1.1.2. In this example, three CORESETs (CORESETs #1 to #3) overlap in time.

CORESET #1 corresponds to CSS set index = 0 and cell index = 0 and has one active TCI state (TCI state #1).

CORESET #2 corresponds to USS set index = 3 and cell index = 0 and has two active TCI states (TCI states #1 and #2).

CORESET #3 corresponds to USS set index = 4 and cell index = 0 and has one active TCI state (TCI state #2).

In the case of FIG. 6, the UE first selects CORESET #1 corresponding to a CSS set, as a prioritized CORESET. Since CORESET #1 has one active TCI state, this corresponds to operation of Embodiment 1.1.2. This prioritized CORESET corresponds to the first prioritized CORESET, and TCI state #1 corresponds to the first priority TCI state.

Next, the UE searches for the second prioritized CORESET. Between remaining CORESETs #2 and #3, a CORESET having two active TCI states and also having one of the TCI states being the same as the first priority TCI state is only CORESET #2. Hence, the UE determines TCI state #2 different from the first priority TCI state between the TCI states of CORESET#2, as the second priority TCI state and determines CORESET #2 as the second prioritized CORESET, to apply TCI states #1 and #2 in CORESET #2 for monitoring of PDCCH candidates.

When the condition (1.1.2a) is considered, the UE does not monitor CORESET #3. When the condition (1.1.2b) is considered, the UE monitors CORESET #3.

Regarding a CORESET being other than the prioritized CORESETs and having two active TCI states, the UE may monitor this CORESET when the following condition (1.1.2c), (1.1.2d), or (1.1.2e) is satisfied:
(1.1.2c) the two active TCI states have the same QCL type D as those of the first priority TCI state and the second priority TCI state,
(1.1.2d) one of the two active TCI states has the same QCL type D as that of the first priority TCI state, and
(1.1.2e) one of the two active TCI states has the same QCL type D as that of one of the first priority TCI state and the second priority TCI state.

Note that, when (1.1.2d) above is satisfied, the UE applies only the TCI state of the same QCL type D as that of the first priority TCI state, to monitor the CORESET.

Note that, when (1.1.2e) above is satisfied, the UE applies only the TCI state of the same QCL type D as that of one of the first priority TCI state and the second priority TCI state, to monitor the CORESET.

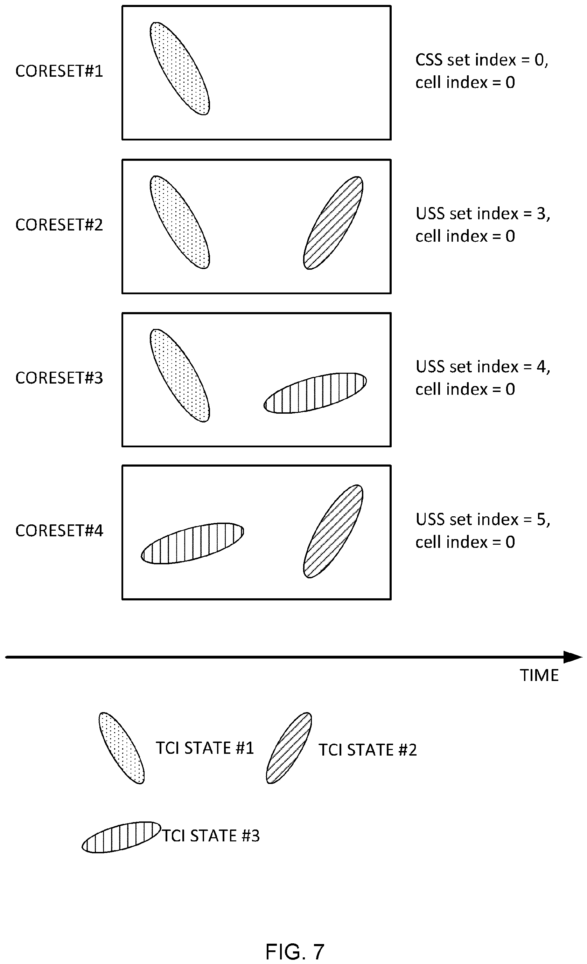

FIG. 7 is a diagram to show an example of prioritized CORESETs and other CORESETs monitored simultaneously in Embodiment 1.1.2. In this example, four CORESETs (CORESETs #1 to #4) overlap in time.

CORESET #1 corresponds to CSS set index = 0 and cell index = 0 and has one active TCI state (TCI state #1).

CORESET #2 corresponds to USS set index = 3 and cell index = 0 and has two active TCI states (TCI states #1 and #2).

CORESET #3 corresponds to USS set index = 4 and cell index = 0 and has two active TCI states (TCI states #1 and #3).

CORESET #4 corresponds to USS set index = 5 and cell index = 0 and has two active TCI states (TCI states #3 and #2).

In the case of FIG. 7, the UE first selects CORESET #1 corresponding to a CSS set, as a prioritized CORESET. Since CORESET #1 has one active TCI state, this corresponds to operation of Embodiment 1.1.2. This prioritized CORESET corresponds to the first prioritized CORESET, and TCI state #1 corresponds to the first priority TCI state.

Next, the UE searches for the second prioritized CORESET. Among remaining CORESETs #2 to #4, CORESETs each having two active TCI states and also having one of the TCI states being the same as the first priority TCI state are only CORESETs #2 and #3. The UE determines CORESET #2 having a lower SS set index as the second prioritized CORESET. The UE determines TCI state #2 different from the first priority TCI state between the TCI states of CORESET#2, as the second priority TCI state and applies TCI states #1 and #2 in CORESET #2 to monitor PDCCH candidates.

When the condition (1.1.2c) is considered, the UE does not monitor CORESET #3. When the condition (1.1.2d) or (1.1.2e) is considered, the UE applies only TCI state #1 to monitor CORESET #3.

When the condition (1.1.2c) or (1.1.2d) is considered, the UE does not monitor CORESET #4. When the condition (1.1.2e) is considered, the UE applies only TCI state #2 to monitor CORESET #4.

### {Embodiment 1.2}

The priority rule of Embodiment 1.2 is as follows.
- Step 1: among colliding CORESETs, if there is a subset of CORESETs each including two active TCI states, apply the priority rule of Rel-16 NR only to the CORESETs. If a prioritized CORESET is found, the step is terminated. Otherwise, proceed to Step 2.
- Step 2: if no prioritized CORESET is found in Step 1, apply the priority rule of Rel-16 NR only to the subset of CORESETs each having one active TCI state, among the colliding CORESETs.

In other words, in Embodiment 1.2, the UE determines a prioritized CORESET in accordance with a priority rule that a monitoring target CORESET is preferentially determined in an order that CSS set having two active TCI states > USS set having two active TCI states > CSS set having one active TCI state > USS set having one active TCI state.

Note that an SS set of a smaller index (in other words, an SS set of a smaller cell index, and an SS set of a smaller SS set index if cell indices are the same) is selected as a prioritized CORESET among SS sets of the same kind (CSS or USS) having the same number of active TCI states.

As the contents described in Embodiment 1.1.1, a CORESET to be monitored may be determined from among the CORESETs other than the prioritized CORESET. Specifically, regarding a CORESET being other than the prioritized CORESET and having one active TCI state, the UE may monitor this CORESET when the one active TCI state is the same QCL type D as that of one of the two active TCI states of the prioritized CORESET.

Regarding a CORESET being other than the prioritized CORESET and having two active TCI states, the UE may monitor this CORESET when the above-described condition (1.1.1a) or (1.1.1b) is satisfied.

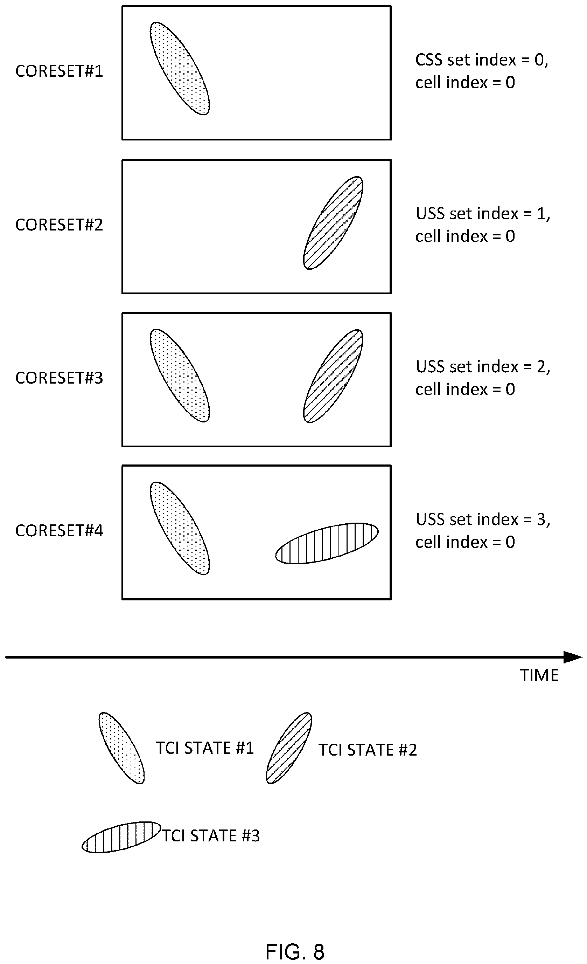

FIG. 8 is a diagram to show an example of a prioritized CORESET and other CORESETs monitored simultaneously in Embodiment 1.2. In this example, four CORESETs (CORESETs #1 to #4) overlap in time.

CORESET #1 corresponds to CSS set index = 0 and cell index = 0 and has one active TCI state (TCI state #1).

CORESET #2 corresponds to USS set index = 1 and cell index = 0 and has one active TCI state (TCI state #2).

CORESET #3 corresponds to USS set index = 2 and cell index = 0 and has two active TCI states (TCI states #1 and #2).

CORESET #4 corresponds to USS set index = 3 and cell index = 0 and has two active TCI states (TCI states #1 and #3).

In the case in FIG. 8, CORESETs having two active TCI states are CORESETs #3 and #4, and CORESET #3 corresponding to a smaller SS set index is selected as a prioritized CORESET.

Since the one TCI state of CORESET #1 has the same QCL type D as that of TCI state #1 of the prioritized CORESET, the UE monitors CORESET #1.

Since the one TCI state of CORESET #2 has the same QCL type D as that of TCI state #2 of the prioritized CORESET, the UE monitors CORESET #2.

While one of the two TCI states of CORESET #4 has the same QCL type D as that of TCI state #1 of the prioritized CORESET, the other has a different type of QCL type D (TCI state #3) from that of TCI state #2 of the prioritized CORESET. Hence, the UE following (1.1.1a) above does not monitor CORESET #4. The UE following (1.1.1b) above applies only TCI state #1 to monitor CORESET #4.

### {Embodiment 1.3}

The priority rule of Embodiment 1.3 is as follows.
- Step 1: Among colliding CORESETs, if there is a CORESET having two active TCI states and corresponding to a CSS set of the lowest index in the cell of the lowest index including CSS sets, this CORESET is determined as a prioritized CORESET, and this step is terminated. Otherwise, proceed to Step 2.
- Step 2: Among colliding CORESETs, if there is a CORESET having one active TCI state and corresponding to a CSS set of the lowest index in the cell of the lowest index including CSS sets, this CORESET is determined as a prioritized CORESET, and this step is terminated. Otherwise, proceed to Step 3.
- Step 3: Among colliding CORESETs, if there is a CORESET having two active TCI states and corresponding to a USS set of the lowest index in the cell of the lowest index including USS sets, this CORESET is determined as a prioritized CORESET, and this step is terminated. Otherwise, proceed to Step 4.
- Step 4: Among colliding CORESETs, if there is a CORESET having one active TCI state and corresponding to a USS set of the lowest index in the cell of the lowest index including USS sets, this CORESET is determined as a prioritized CORESET, and this step is terminated.

In other words, in Embodiment 1.3, the UE determines a prioritized CORESET in accordance with a priority rule that a monitoring target CORESET is preferentially determined in an order that CSS set having two active TCI states > CSS set having one active TCI state > USS set having two active TCI states > USS set having one active TCI state.

Note that an SS set of a smaller index (in other words, an SS set of a smaller cell index, and SS set of a smaller SS set index if cell indices are the same) is selected as a prioritized CORESET among SS sets of the same kind (CSS or USS) having the same number of active TCI states.

When a prioritized CORESET is determined in Step 1 or 3 above, the UE may further determine a CORESET to monitor from among the CORESETs other than the prioritized CORESET, based on Embodiment 1.1.1.

When a prioritized CORESET is determined in Step 2 or 4 above, the UE may further determine a CORESET to monitor from among the CORESETs other than the prioritized CORESET, based on Embodiment 1.1.2.

According to the first embodiment described above, when a plurality of PDCCHs (CORESETs) collide, a PDCCH to monitor can be determined appropriately.

### <Second Embodiment>

A second embodiment relates to an FDM PDCCH repetition scheme.

In the second embodiment, two SS sets having a plurality of corresponding CORESETs may be used for PDCCH repetition. Association between the two SS sets and the plurality of CORESETs may be defined in a specification in advance or may be configured for the UE by higher layer signaling (for example, RRC signaling).

In the second embodiment, in a case where a plurality of PDCCHs of different types of QCL type D collide, the UE determines a prioritized CORESET, based on at least one priority rule illustrated in Embodiments 2.1 to 2.3. Each of the embodiments will be described below.

Note that association between a given CORESET (for example, a prioritized CORESET) and another CORESET may be defined in a specification in advance or may be configured for the UE by higher layer signaling (for example, RRC signaling). What are associated are not limited to CORESETs, and a CORESET and an SS set may be associated, or SS sets may be associated.

In the second embodiment, a prioritized CORESET may be interpreted as a "prioritized CORESET / SS set corresponding to a prioritized CORESET" and vice versa. In the second embodiment, another CORESET may be interpreted as "another CORESET / SS set corresponding to another CORESET" and vice versa.

"Association" in the second embodiment may be referred to as association for control of collision of a plurality of PDCCHs, association for CORESET selection for PDCCH monitoring, association related to CORESET priority, and the like.

### {Embodiment 2.1}

The priority rule of Embodiment 2.1 is the same as that of Rel-16 NR. Specifically, the UE determines a prioritized CORESET in accordance with a priority rule that a CSS set is monitored more preferentially than a USS set, and an SS set of a smaller index (in other words, an SS set of a smaller cell index, and SS set of a smaller SS set index if cell indices are the same) is monitored preferentially among SS sets of the same type (CSS or USS).

Embodiment 2.1 is further broadly divided into the following two embodiments:
- Embodiment 2.1.1: a prioritized CORESET is associated with another CORESET, and
- Embodiment 2.1.2: a prioritized CORESET is not associated with another CORESET.

### {{Embodiment 2.1.1}}

The UE may monitor another CORESET associated with a prioritized CORESET simultaneously with the prioritized CORESET.

In Embodiment 2.1.1, the TCI state of the prioritized CORESET may be referred to as a first priority TCI state (1st priority TCI state). The TCI state of such another CORESET may be referred to as a second priority TCI state (2nd priority TCI state).

Regarding a remaining CORESET excluding the prioritized CORESET and such another CORESET, the UE may monitor this CORESET when the following condition (2.1.1a) or (2.1.1b) is satisfied:
(2.1.1a) the TCI state has the same QCL type D as that of the first priority TCI state, and
(2.1.1b) the TCI state has the same QCL type D as that of the first priority TCI state or the second priority TCI state.

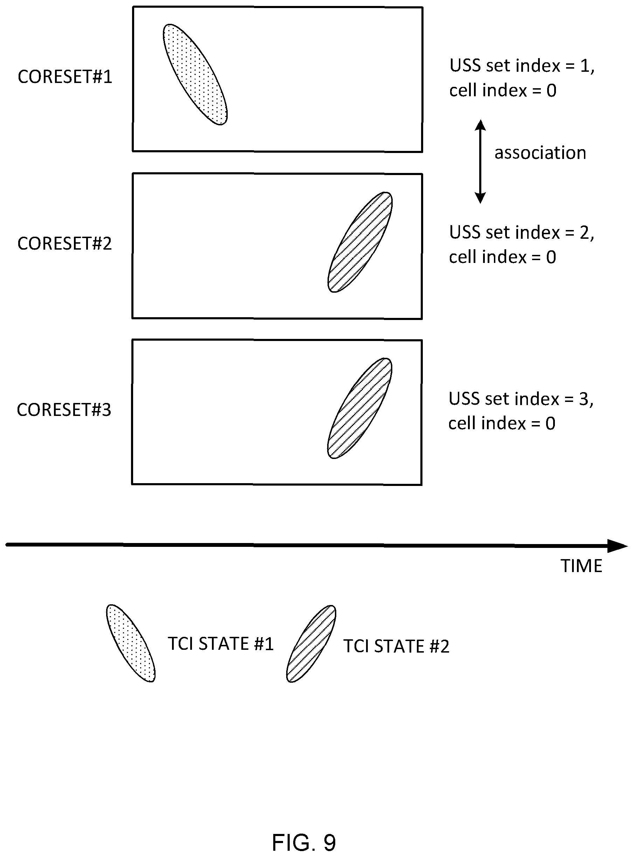

FIG. 9 is a diagram to show an example of prioritized CORESETs and another CORESET monitored simultaneously in Embodiment 2.1.1. In this example, three CORESETs (CORESETs #1 to #3) overlap in time.

CORESET #1 corresponds to USS set index = 1 and cell index = 0 and has one active TCI state (TCI state #1).

CORESET #2 corresponds to USS set index = 2 and cell index = 0 and has one active TCI state (TCI state #2).

CORESET #3 corresponds to USS set index = 3 and cell index = 0 and has one active TCI state (TCI state #2).

CORESETs #1 an #2 are associated with each other.

In the case of FIG. 9, the UE first selects CORESET #1 corresponding to a USS set of the lowest USS set index, as a prioritized CORESET. Since CORESET #1 has another CORESET (CORESET #2) associated with CORESET #1, this corresponds to operation of Embodiment 2.1.1.

Since CORESET #2 is associated with the prioritized CORESET, the UE monitors CORESET #2. The UE determines the active TCI state of CORESET #2 as a second priority TCI state.

CORESET #3 is not associated with the prioritized CORESET, but the active TCI state of CORESET #3 is the same QCL type D as that of the second priority TCI state. Hence, the UE following (2.1.1a) above does not monitor CORESET #3. The UE following (2.1.1b) above monitors CORESET #3.

### {{Embodiment 2.1.2}}

For Embodiment 2.1.2, a prioritized CORESET determined first in accordance with the same priority rule as that in Rel-16 NR is also referred to as a first prioritized CORESET, and a prioritized CORESET determined next other than the first prioritized CORESET is also referred to as a second prioritized CORESET. The second prioritized CORESET may be referred to as a CORESET X.

The active TCI state of the first prioritized CORESET may be referred to as a first priority TCI state (1st priority TCI state). The active TCI state of the second prioritized CORESET may be referred to as a second priority TCI state (2nd priority TCI state).

Embodiment 2.1.2 is broadly divided into Embodiments 2.1.2.1 and 2.1.2.2 depending on a method of determining the second prioritized CORESET.

### {{Embodiment 2.1.2.1}}

The second prioritized CORESET may be determined in accordance with a similar priority rule to that in Rel. 16 from among the remaining colliding CORESETs excluding the first prioritized CORESET. In other words, the second prioritized CORESET may correspond, if any, to a CSS set of the lowest index in a cell of the lowest index including CSS sets and otherwise correspond to a USS set of the lowest index of a cell of the lowest index, among the remaining colliding CORESETs. The lowest USS set index is determined over all the USS sets including at least one PDCCH candidate in the overlapping PDCCH monitoring occasions.

In a case where the active TCI state of a candidate for the second prioritized CORESET derived in accordance with the priority rule is the same as the first priority TCI state, the next candidate (CORESET corresponding to an SS set/cell of the next lowest index) may be searched for as a candidate for the second prioritized CORESET. In other words, the UE may continue searching for the second prioritized CORESET until the active TCI state comes to be different from the first priority TCI state.

When a CORESET including only one active TCI state different from the first priority TCI state is found in accordance with the priority rule, the UE may determine this active TCI state as the second priority TCI state and determine this CORESET as the second prioritized CORESET.

Note that, even in a case where the active TCI state of a candidate for the second prioritized CORESET derived in accordance with the priority rule is the same as the first priority TCI state, the UE may determine this active TCI state as the second priority TCI state and determine this candidate as the second prioritized CORESET. In this case, the second prioritized CORESET is the same as the first prioritized CORESET and may hence be expressed that there is no second prioritized CORESET.

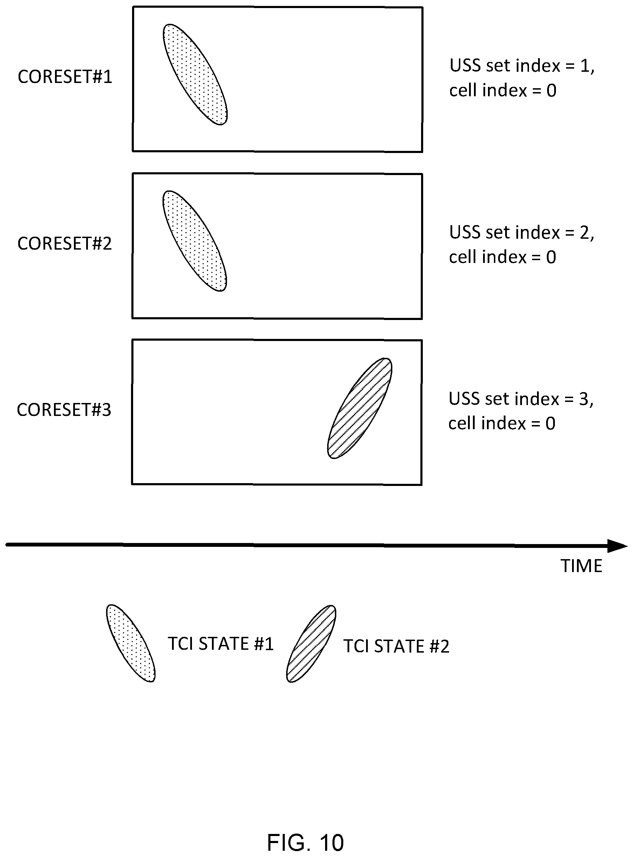

FIG. 10 is a diagram to show an example of prioritized CORESETs in Embodiment 2.1.2.1. In this example, three CORESETs (CORESETs #1 to #3) overlap in time.

CORESET #1 corresponds to USS set index = 1 and cell index = 0 and has one active TCI state (TCI state #1).

CORESET #2 corresponds to USS set index = 2 and cell index = 0 and has one active TCI state (TCI state #1).

CORESET #3 corresponds to USS set index = 3 and cell index = 0 and has one active TCI state (TCI state #2).

In the case of FIG. 10, the UE first selects CORESET #1 corresponding to a USS set of the lowest USS set index, as a prioritized CORESET. Since CORESET #1 does not have another CORESET associated with CORESET #1, this corresponds to operation of Embodiment 2.1.2. This prioritized CORESET corresponds to the first prioritized CORESET, and TCI state #1 corresponds to the first priority TCI state.

Next, the UE searches for the second prioritized CORESET. Since the TCI state (TCI state #2) of CORESET #3 is different from TCI state #1 of the prioritized CORESET, the UE determines this TCI state #2 as the second priority TCI state and determines CORESET #3 as the second prioritized CORESET, for monitoring.

### {{Embodiment 2.1.2.2}}

The UE first determines a subset of CORESETs each associated with another CORESET and having the same TCI state as the first priority TCI state, from among the remaining colliding CORESETs excluding the first prioritized CORESET.

The UE may then determine the second prioritized CORESET from the subset in accordance with a similar priority rule to that in Rel. 16.
In other words, the second prioritized CORESET may correspond, if any, to a CSS set of the lowest index in a cell of the lowest index including CSS sets and otherwise correspond to a USS set of the lowest index of a cell of the lowest index, among the CORESETs included in the subset.
The lowest USS set index is determined over all the USS sets including at least one PDCCH candidate in the overlapping PDCCH monitoring occasions.

The second priority TCI state may correspond to the active TCI state of another CORESET associated with the second prioritized CORESET.

Note that the second prioritized CORESET may be a CORESET associated with a CORESET corresponding to a CSS set of the lowest index in a cell of the lowest index including CSS sets, if any, and otherwise a CORESET associated with a CORESET corresponding to a USS set of the lowest index of a cell of the lowest index, among the CORESETs included in the subset. In this case, the second priority TCI state may correspond to the active TCI state of the second prioritized CORESET.

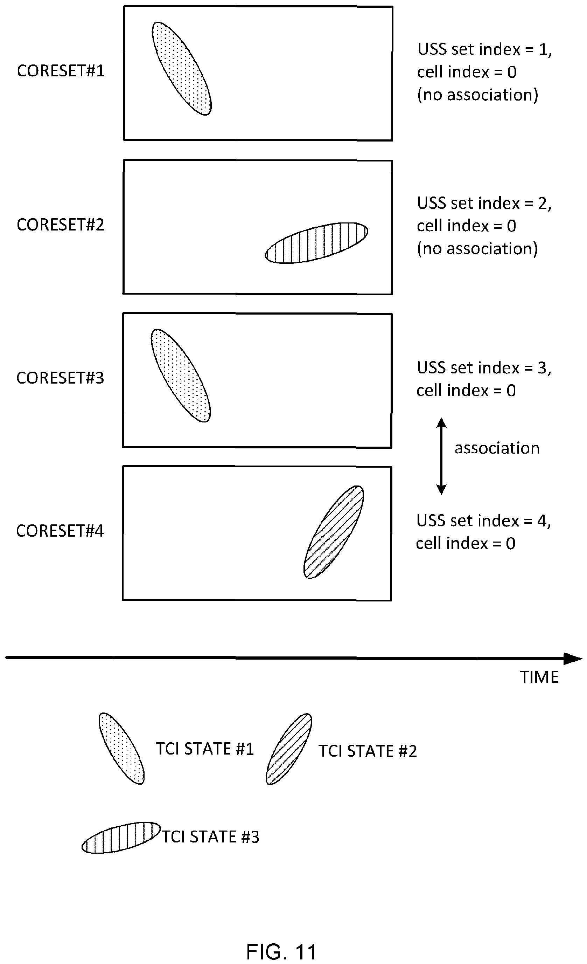

FIG. 11 is a diagram to show an example of prioritized CORESETs in Embodiment 2.1.2.2. In this example, four CORESETs (CORESETs #1 to #4) overlap in time.

CORESET #1 corresponds to USS set index = 1 and cell index = 0 and has one active TCI state (TCI state #1).

CORESET #2 corresponds to USS set index = 2 and cell index = 0 and has one active TCI state (TCI state #3).

CORESET #3 corresponds to USS set index = 3 and cell index = 0 and has one active TCI state (TCI state #1).

CORESET #4 corresponds to USS set index = 4 and cell index = 0 and has one active TCI state (TCI state #2).

CORESET #1 is not associated with another CORESET. CORESET #2 is not associated with another CORESET. CORESETs #3 an #4 are associated with each other.

In the case of FIG. 11, the UE first selects CORESET #1 corresponding to a USS set of the lowest USS set index, as a prioritized CORESET. Since CORESET #1 does not have another CORESET associated with CORESET #1, this corresponds to operation of Embodiment 2.1.2. This prioritized CORESET corresponds to the first prioritized CORESET, and TCI state #1 corresponds to the first priority TCI state.

Next, the UE searches for the second prioritized CORESET. Among remaining CORESETs #2 to #4, a CORESET having another CORESET associated with the CORESET and also having the same TCI state as the first priority TCI state is only CORESET #3. Hence, the UE determines CORESET #3 as the second prioritized CORESET and determines TCI state #2 of CORESET #4 associated with CORESET #3 as the second priority TCI state. The UE monitors PDCCH candidates in CORESETs #3 and #4.

### {{CORESETs other than Prioritized CORESETs}}

Monitoring of the prioritized CORESETs (first prioritized CORESET and second prioritized CORESET) and CORESETs other than the CORESETs associated with the prioritized CORESETs in Embodiment 2.1.2 will be described.

Regarding the CORESETs, the UE may monitor the CORESETs when the following condition (2.1.2a) or (2.1.2b) is satisfied:
(2.1.2a) the TCI state has the same QCL type D as that of the first priority TCI state, and
(2.1.2b) the TCI state has the same QCL type D as that of the first priority TCI state or the second priority TCI state.

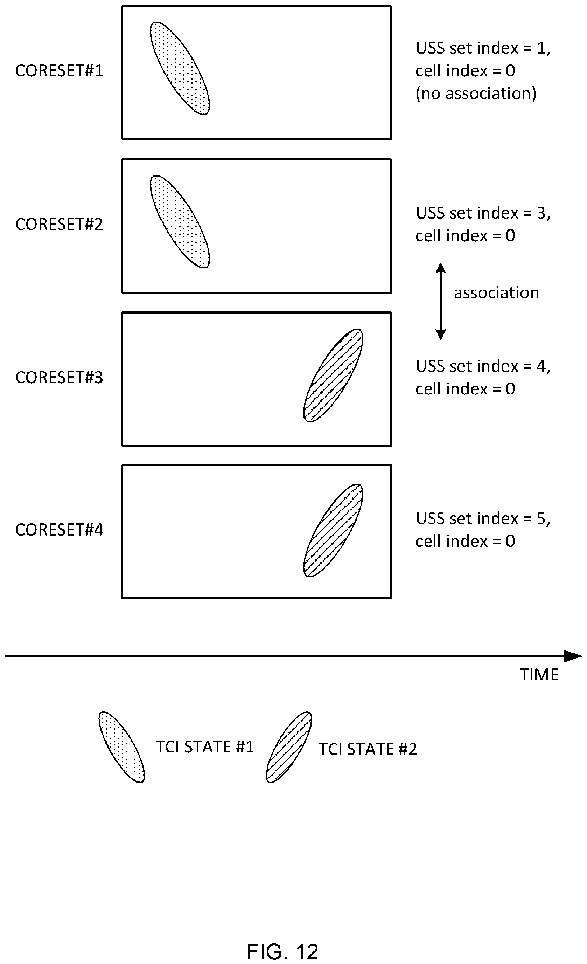

FIG. 12 is a diagram to show an example of prioritized CORESETs and other CORESETs monitored simultaneously in Embodiment 2.1.2. In this example, four CORESETs (CORESETs #1 to #4) overlap in time.

CORESET #1 corresponds to USS set index = 1 and cell index = 0 and has one active TCI state (TCI state #1).

CORESET #2 corresponds to USS set index = 3 and cell index = 0 and has one active TCI state (TCI state #1).

CORESET #3 corresponds to USS set index = 4 and cell index = 0 and has one active TCI state (TCI state #2).

CORESET #4 corresponds to USS set index = 5 and cell index = 0 and has one active TCI state (TCI state #2).

CORESET #1 is not associated with another CORESET. CORESETs #2 an #3 are associated with each other.

In the case of FIG. 12, the UE first selects CORESET #1 corresponding to a USS set of the lowest USS set index, as a prioritized CORESET. Since CORESET #1 does not have another CORESET associated with CORESET #1, this corresponds to operation of Embodiment 2.1.2. This prioritized CORESET corresponds to the first prioritized CORESET, and TCI state #1 corresponds to the first priority TCI state.

Next, the UE searches for the second prioritized CORESET. Among remaining CORESETs #2 to #4, a CORESET having another CORESET associated with the CORESET and also having the same TCI state as the first priority TCI state is only CORESET #2. Hence, the UE determines CORESET #2 as the second prioritized CORESET and determines TCI state #2 of CORESET #3 associated with CORESET #2 as the second priority TCI state. The UE monitors PDCCH candidates in CORESETs #2 and #3.

When the condition (2.1.2a) is considered, the UE does not monitor CORESET #4. When the condition (2.1.2b) is considered, the UE monitors CORESET #4.

### {Embodiment 2.2}

The priority rule of Embodiment 2.2 is as follows.
- Step 1: Among colliding CORESETs, if there is a subset of CORESETs each associated with another CORESET (in other words, having association with another CORESET), apply the priority rule of Rel-16 NR only to the CORESETs. If a prioritized CORESET is found, the step is terminated. Otherwise, proceed to Step 2.
- Step 2: If no prioritized CORESET is found in Step 1, apply the priority rule of Rel-16 NR only to the subset of CORESETs each not having association with another CORESET among the colliding CORESETs.

In other words, in Embodiment 2.2, the UE determines a prioritized CORESET in accordance with a priority rule that a monitoring target CORESET is preferentially determined in an order that CSS set having association with another CORESET (also referred to simply as "association" below in the present disclosure) > USS set having association > CSS set not having association > USS set not having association.

Note that an SS set of a smaller index (in other words, an SS set of a smaller cell index, and an SS set of a smaller SS set index if cell indices are the same) is selected as a prioritized CORESET among SS sets of the same kind (CSS or USS) each having association (or not having association).

As the contents described in Embodiment 2.1.1, a CORESET to be monitored may be determined from among the CORESETs other than the prioritized CORESET. In other words, regarding a remaining CORESET excluding the prioritized CORESET and such another CORESET associated with the prioritized CORESET, the UE may monitor this CORESET when condition (2.1.1a) or (2.1.1b) above is satisfied.

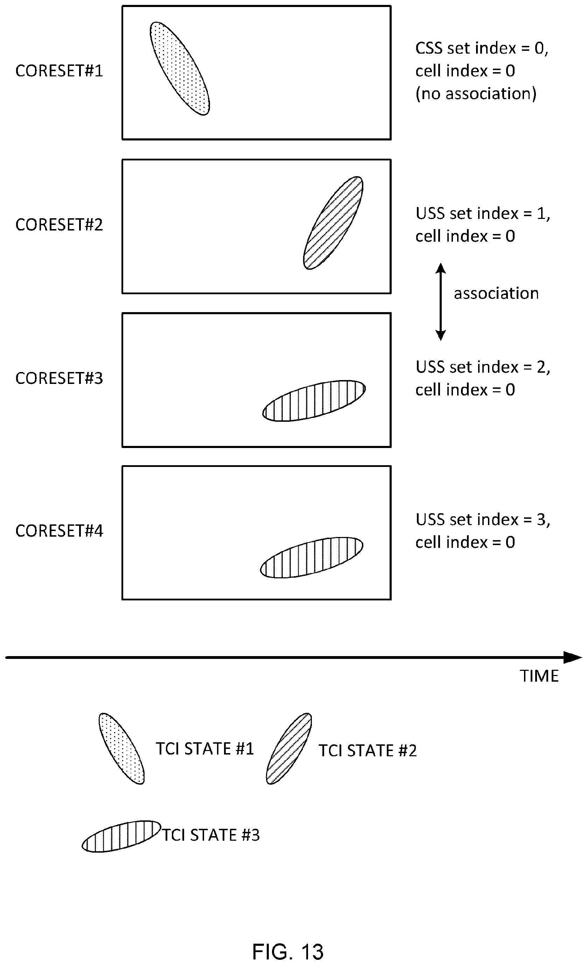

FIG. 13 is a diagram to show an example of a prioritized CORESET and other CORESETs monitored simultaneously in Embodiment 2.2. In this example, four CORESETs (CORESETs #1 to #4) overlap in time.

CORESET #1 corresponds to CSS set index = 0 and cell index = 0 and has one active TCI state (TCI state #1).

CORESET #2 corresponds to USS set index = 1 and cell index = 0 and has one active TCI state (TCI state #2).

CORESET #3 corresponds to USS set index = 2 and cell index = 0 and has one active TCI state (TCI state #3).

CORESET #4 corresponds to USS set index = 3 and cell index = 0 and has one active TCI state (TCI state #3).

CORESET #1 is not associated with another CORESET. CORESETs #2 an #3 are associated with each other.

In the case in FIG. 13, CORESETs each associated with another CORESET are CORESETs #2 and #3, and CORESET #2 corresponding to a smaller SS set index is selected as a prioritized CORESET. TCI state #2 of CORESET #2 corresponds to the first priority TCI state.

TCI state #3 of CORESET #3 associated with the prioritized CORESET is determined as the second priority TCI state. The UE monitors PDCCH candidates in CORESETs #2 and #3.

Since the TCI state of CORESET #1 is neither the first priority TCI state nor the second priority TCI state, the UE does not monitor CORESET #1. The UE following (2.1.1a) above does not monitor CORESET #4. The UE following (2.1.1b) above monitors CORESET #4.

### {Embodiment 2.3}

The priority rule of Embodiment 2.3 is as follows.
- Step 1: Among colliding CORESETs, if there is a CORESET having association and corresponding to a CSS set of the lowest index in the cell of the lowest index including a CSS set, this CORESET is determined as a prioritized CORESET, and this step is terminated. Otherwise, proceed to Step 2.
- Step 2: Among the colliding CORESETs, if there is a CORESET not having association and corresponding to a CSS set of the lowest index in the cell of the lowest index including a CSS set, this CORESET is determined as a prioritized CORESET, and this step is terminated. Otherwise, proceed to Step 3.
- Step 3: Among the colliding CORESETs, if there is a CORESET having association and corresponding to a USS set of the lowest index in the cell of the lowest index including a USS set, this CORESET is determined as a prioritized CORESET, and this step is terminated. Otherwise, proceed to Step 4.
- Step 4: Among the colliding CORESETs, if there is a CORESET not having association and corresponding to a USS set of the lowest index in the cell of the lowest index including a USS set, this CORESET is determined as a prioritized CORESET, and this step is terminated.

In other words, in Embodiment 2.3, the UE determines a prioritized CORESET in accordance with a priority rule that a monitoring target CORESET is preferentially determined in an order that CSS set having association > CSS set not having association > USS set having association > USS set not having association.

Note that an SS set of a smaller index (in other words, an SS set of a smaller cell index, and an SS set of a smaller SS set index if cell indices are the same) is selected as a prioritized CORESET among SS sets of the same kind (CSS or USS) each having association (or not having association).

When a prioritized CORESET is determined in Step 1 or 3 above, the UE may further determine a CORESET to monitor from among the CORESETs other than the prioritized CORESET, based on Embodiment 2.1.1.

When a prioritized CORESET is determined in Step 2 or 4 above, the UE may further determine a CORESET to monitor from among the CORESETs other than the prioritized CORESET, based on Embodiment 2.1.2.

According to the second embodiment described above, when a plurality of PDCCHs (CORESETs) collide, a PDCCH to monitor can be determined appropriately.

### <Others>

Note that at least one of the above-described embodiments may be applied only to a UE that has reported particular UE capability or supports the particular UE capability.

The particular UE capability may indicate at least one of the following:
- whether to support an SFN PDCCH repetition scheme,
- whether to support an FDM PDCCH repetition scheme,
- whether to support an SFN PDCCH repetition scheme for a CSS set,
- whether to support an FDM PDCCH repetition scheme for a CSS set, and
- whether to support simultaneous reception of PDCCHs of two or more different types of QCL type D.

At least one of the above-described embodiments may be applied to a case where the UE is configured with particular information related to the above-described embodiments by higher layer signaling (in a case where the UE is not configured with the particular information, apply Rel-15/16 operation, for example). For example, the particular information may be information indicating enabling of an SFN/FDM PDCCH repetition scheme, any RRC parameter for a particular release (for example, Rel. 17), or the like.

Note that the first embodiment is not limited to be applied to a case where the UE is configured with (uses) an SFN PDCCH repetition scheme but can be applied to a case where two or more TCI states are activated for one CORESET.

The second embodiment is not limited to be applied to a case where the UE is configured with (uses) an FDM PDCCH repetition scheme but can be applied to a case where two SS sets having a plurality of corresponding CORESETs are used for PDCCHs.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

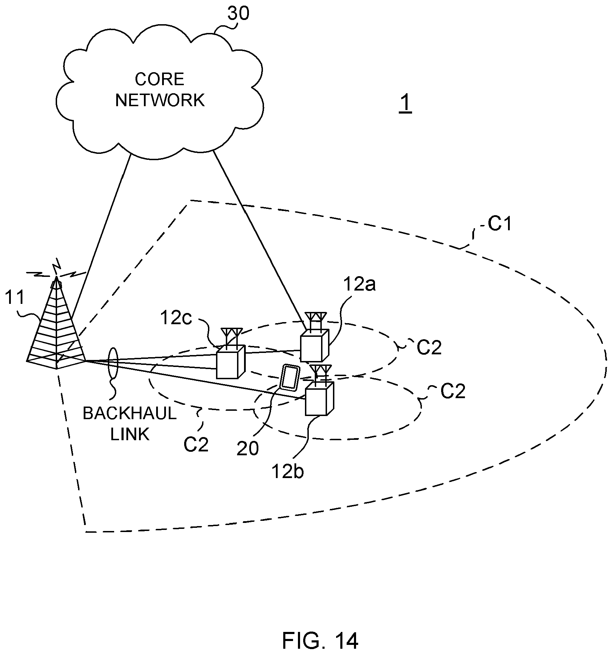

FIG. 14 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

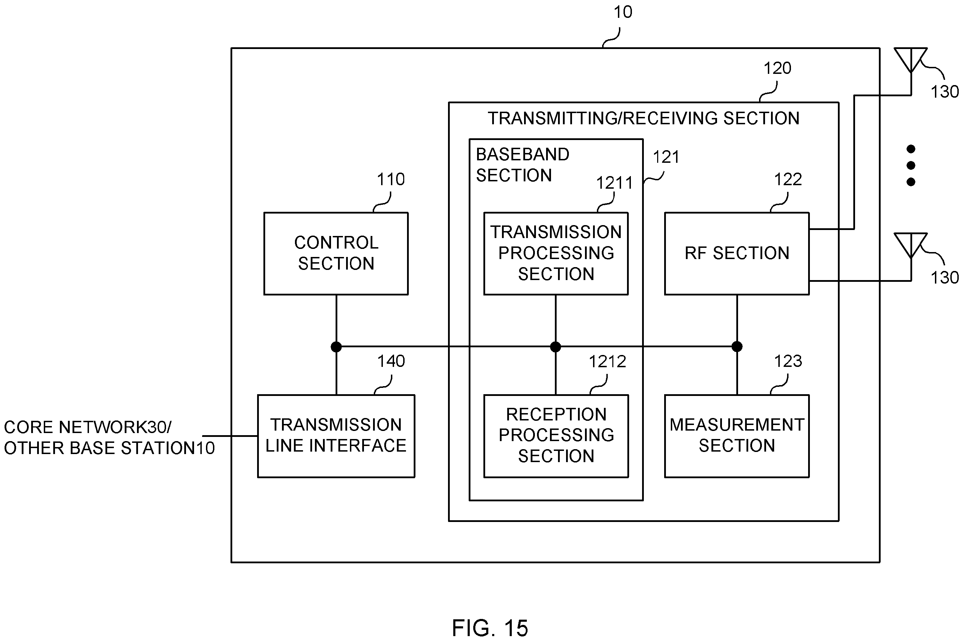

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, at least one of downlink control channels (Physical Downlink Control Channels (PDCCHs)) in a plurality of control resource sets (CORESETs) overlapping in time.

The control section 110 may assume that the user terminal 20 performs control to determine a PDCCH to monitor, based on a CORESET having two transmission configuration indication states (TCI states) being activated.

The control section 110 may assume that the user terminal 20 performs control to determine a PDCCH to monitor, based on association between CORESETs (for example, whether a given CORESET is associated with another CORESET).

### (User Terminal)

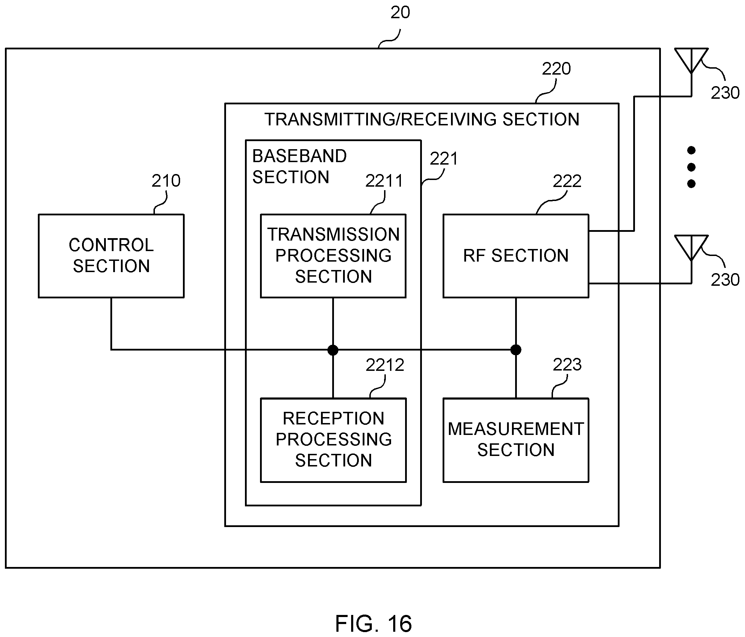

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may determine a downlink control channel (Physical Downlink Control Channel (PDCCH)) to monitor from among PDCCHs in a plurality of control resource sets (CORESETs) overlapping in time, based on a CORESET having two transmission configuration indication states (TCI states) being activated.

The transmitting/receiving section 220 may monitor the determined PDCCH.

The control section 210 may determine the PDCCH to monitor from among the plurality of CORESETs to more preferentially monitor a CORESET corresponding to a common search space (CSS) set than a CORESET corresponding to a UE-specific search space (USS) set.

The control section 210 may determine the PDCCH to monitor from among the plurality of CORESETs to preferentially monitor a CORESET in an order of a CORESET corresponding to a common search space (CSS) set and having two active TCI states, a CORESET corresponding to a UE-specific search space (USS) set and having two active TCI states, a CORESET corresponding to a CSS set and having one active TCI state, and then a CORESET corresponding to a USS set and having one active TCI state.

The control section 210 may determine the PDCCH to monitor from among the plurality of CORESETs to preferentially monitor a CORESET in an order of a CORESET corresponding to a common search space (CSS) set and having two active TCI states, a CORESET corresponding to a CSS set and having one active TCI state, a CORESET corresponding to a UE-specific search space (USS) set and having two active TCI states, and then a CORESET corresponding to a USS set and having one active TCI state.

The control section 210 may determine a downlink control channel (Physical Downlink Control Channel (PDCCH)) to monitor from among PDCCHs in a plurality of control resource sets (CORESETs) overlapping in time, based on association between the CORESETs.

The transmitting/receiving section 220 may monitor the determined PDCCH.

The control section 210 may determine the PDCCH to monitor from among the plurality of CORESETs to more preferentially monitor a CORESET corresponding to a common search space (CSS) set than a CORESET corresponding to a UE-specific search space (USS) set.

The control section 210 may determine the PDCCH to monitor from among the plurality of CORESETs to preferentially monitor a CORESET in an order of a CORESET corresponding to a common search space (CSS) set and having association with another CORESET, a CORESET corresponding to a UE-specific search space (USS) set and having association with another CORESET, a CORESET corresponding to a CSS set and not having association with another CORESET, and then a CORESET corresponding to a USS set and not having association with another CORESET.

The control section 210 may determine the PDCCH to monitor from among the plurality of CORESETs to preferentially monitor a CORESET in an order of a CORESET corresponding to a common search space (CSS) set and having association with another CORESET, a CORESET corresponding to a CSS set and not having association with another CORESET, a CORESET corresponding to a UE-specific search space (USS) set and having association with another CORESET, and then a CORESET corresponding to a USS set and not having association with another CORESET.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

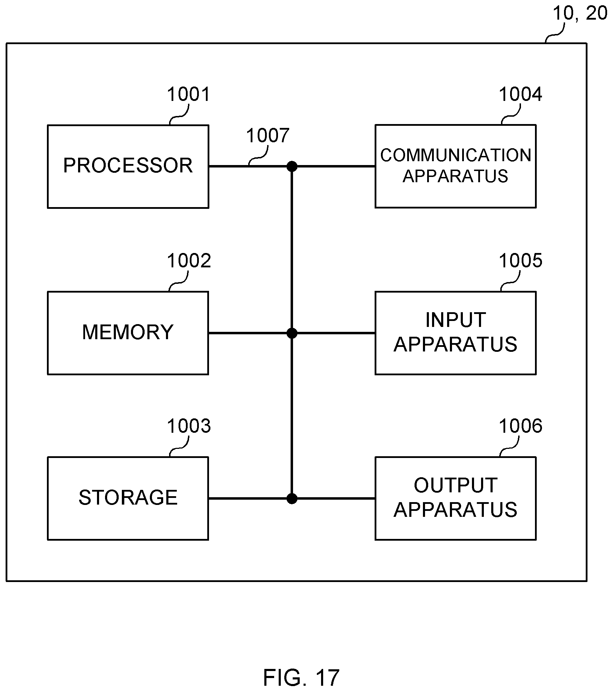

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given channel/signal outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that determines a downlink control channel (Physical Downlink Control Channel (PDCCH)) to monitor from among PDCCHs in a plurality of control resource sets (CORESETs) overlapping in time, based on association between the CORESETs; and
a receiving section that monitors the determined PDCCH.

2. The terminal according to claim 1, wherein
the control section determines the PDCCH to monitor from among the plurality of CORESETs, to more preferentially monitor a CORESET corresponding to a common search space (CSS) set than a CORESET corresponding to a UE-specific search space (USS) set.

3. The terminal according to claim 1, wherein
the control section determines the PDCCH to monitor from among the plurality of CORESETs to preferentially monitor a CORESET in an order of a CORESET corresponding to a common search space (CSS) set and having association with another CORESET, a CORESET corresponding to a UE-specific search space (USS) set and having association with another CORESET, a CORESET corresponding to a CSS set and not having association with another CORESET, and then a CORESET corresponding to a USS set and not having association with another CORESET.

4. The terminal according to claim 1, wherein
the control section determines the PDCCH to monitor from among the plurality of CORESETs to preferentially monitor a CORESET in an order of a CORESET corresponding to a common search space (CSS) set and having association with another CORESET, a CORESET corresponding to a CSS set and not having association with another CORESET, a CORESET corresponding to a UE-specific search space (USS) set and having association with another CORESET, and then a CORESET corresponding to a USS set and not having association with another CORESET.

5. A radio communication method for a terminal, the radio communication method comprising:
determining a downlink control channel (Physical Downlink Control Channel (PDCCH)) to monitor from among PDCCHs in a plurality of control resource sets (CORESETs) overlapping in time, based on association between the CORESETs; and
monitoring the determined PDCCH.

6. A base station comprising:
a transmitting section that transmits, to a terminal, at least one of downlink control channels (Physical Downlink Control Channels (PDCCHs)) in a plurality of control resource sets (CORESETs) overlapping in time; and
a control section that assumes that the terminal performs control to determine a PDCCH to monitor, based on association between the CORESETs.
